# EUROPÄISCHE PATENTSCHRIFT

(11) **EP 2 512 902 B1**
(45) Veröffentlichungstag und Bekanntmachung des Hinweises auf die Patenterteilung: **26.02.2014**
(21) Anmeldenummer: 10807311.5
(22) Anmeldetag: 13.12.2010
(51) Int. Cl.: B62D 13/02, B62D 13/04

(54) **FAHRZEUGANHÄNGER MIT EINER ZWANGSLENKUNG**
VEHICLE TRAILER HAVING A FORCED STEERING SYSTEM
REMORQUE DE VÉHICULE À GUIDAGE FORCÉ

(30) Priorität: 18.12.2009 AT 20092009
(43) Veröffentlichungstag der Anmeldung: 24.10.2012
(73) Patentinhaber: Scharmüller, Josef, 4892 Fornach (AT); Scharmüller, Josef, jun., 4892 Fornach (AT)
(72) Erfinder: Scharmüller, Josef, 4892 Fornach (AT); Scharmüller, Josef, jun., 4892 Fornach (AT)
(74) Vertreter: Gibler & Poth Patentanwälte OG
(86) Internationale Anmeldenummer: PCT/AT2010/000476
(87) Internationale Veröffentlichungsnummer: WO 2011/072316

(56) Entgegenhaltungen:
- EP-A2- 1 847 448
- WO-A1-2009/065454
- DE-U1-202004 000 605

## Beschreibung

Die Erfindung betrifft einen Fahrzeuganhänger mit einer Zwangslenkung gemäß dem Oberbegriff des Patentanspruches 1.

Beim Fahrzeuganhänger mit der Zwangslenkung werden zumindest die Räder einer Achse des Fahrzeuganhängers zwangsgelenkt, wobei die Radstellung zwangsweise von einer Länge mindestens eines Nehmerzylinders der Zwangslenkung abhängt. Der Nehmerzylinder wird hydraulisch angesteuert und ein Geberzylinder gibt die Längenänderung des Nehmerzylinders vor. Die Radstellung folgt der Längenänderung des Nehmerzylinders, wobei die Längenänderung des Nehmerzylinders die seitliche Auslenkung der Räder der gelenkten Achse um die Lenk-Drehachsen der Räder bewirkt. Der Zusammenhang zwischen der Längenänderung des Nehmerzylinders und der Winkeländerung der Lenkstellung der Räder der gelenkten Achse wird als Übertragungsfunktion der gelenkten Achse bezeichnet. Dokument DE 20 2004 000 605 U1 offenbart die Präambel des Anspruchs 1.

Der Fahrzeuganhänger ist zum Anhängen an ein Zugfahrzeug, insbesondere einen Traktor, vorgesehen. Im gekoppelten Zustand bilden der Fahrzeuganhänger und das Zugfahrzeug ein Zuggespann. Für die zuverlässige Funktion des Zuggespanns ist erforderlich, dass das Lenkverhalten des Zugfahrzeugs und das Lenkverhalten des Fahrzeuganhängers aufeinander abgestimmt sind. Ist dies nicht der Fall, beispielsweise wenn das Zugfahrzeug des Zuggespanns gewechselt wird, dann funktioniert die Zwangslenkung oftmals unzufriedenstellend oder nicht.

Aufgabe der Erfindung ist es daher einen Fahrzeuganhänger der eingangs genannten Art anzugeben, welcher gewährleistet, dass die Zwangslenkung an unterschiedlichen Zugfahrzeugen mit unterschiedlichen Lenkverhalten zuverlässig funktioniert und gegebenenfalls erforderliche Anpassungen des Lenkverhaltens des Fahrzeuganhängers einfach und vor Ort durchgeführt werden können.

Erfindungsgemäß wird dies durch die Merkmale des Patentanspruches 1 erreicht.

Durch die Veränderung wenigstens eines der Angriffspunkte quer zur Wirkachse des ersten Nehmerzylinders wird die Lage der Wirkachse und/oder der Abstand zwischen eben diesem Angriffspunkt und der benachbarten Lenk-Drehachse des Rades verändert. Dadurch ergibt sich der Vorteil, dass die - herkömmlicherweise fixe - Übertragungsfunktion der gelenkten Achse vorgebbar verändert werden kann, insbesondere an ein geändertes Lenkverhalten des Zugfahrzeuges angepasst werden kann. Vorteilhaft dabei ist, dass die vorgebbare Änderung der Übertragungsfunktion der gelenkten Achse ohne einen Eingriff oder Austausch von Geberzylinder oder Nehmerzylinder des hydraulischen Systems erfolgen kann. Vorteilhaft dabei ist, dass diese Änderung der Übertragungsfunktion der gelenkten Achse vor Ort, also auch am Feld oder auf der Straße, durchgeführt werden kann. Im Unterschied dazu kann der Eingriff oder der Austausch von Geberzylinder oder Nehmerzylinder des hydraulischen Systems - aufgrund der dabei auftretenden Verschmutzungsgefahr mittels Hydrauliköl - nicht ohne Weiteres vor Ort erfolgen.

Die Unteransprüche, welche ebenso wie der Patentanspruch 1 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich eine bevorzugte erste Ausführungsform beispielhaft dargestellt ist, näher beschrieben. Dabei zeigt:
Fig. 1 eine bevorzugte erste Ausführungsform einer gelenkten Achse eines Fahrzeuganhänger mit einer Zwangslenkung in Aufsicht;
Fig. 2 die gelenkte Achse der Fig. 1 in Frontansicht;
Fig. 3 die gelenkte Achse der Fig. 1 in Seitenansicht;
Fig. 4 Teile der gelenkten Achse der Fig. 1 in Schrägansicht;
Fig. 5 eine bevorzugte zweite Ausführungsform der gelenkten Achse des Fahrzeuganhänger mit der Zwangslenkung in Schrägansicht;
Fig. 6 die gelenkte Achse der Fig. 5 in Aufsicht; und
Fig. 7 die gelenkte Achse der Fig. 5 in Ansicht von Hinten.

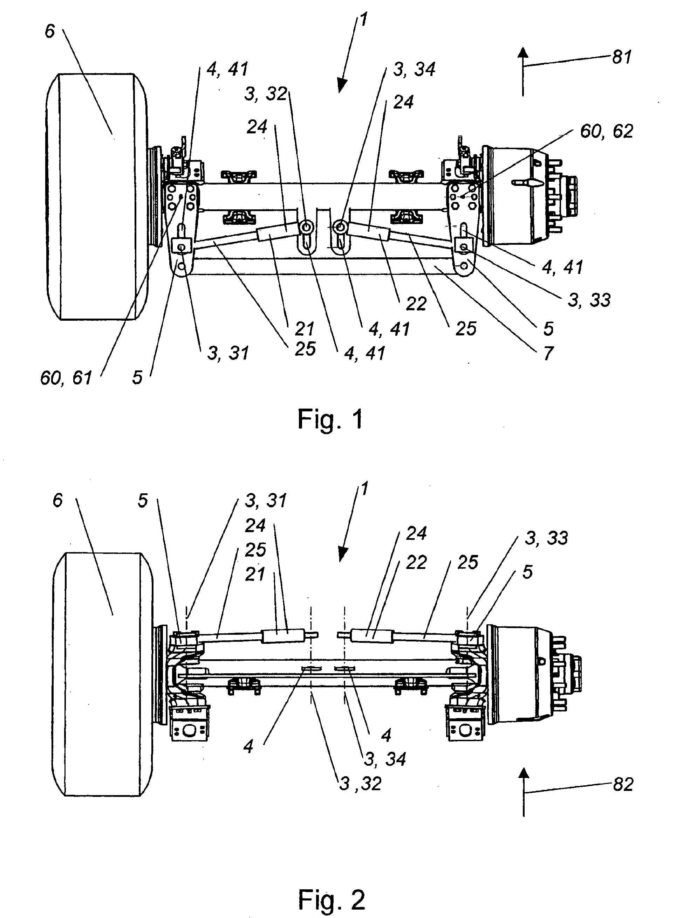

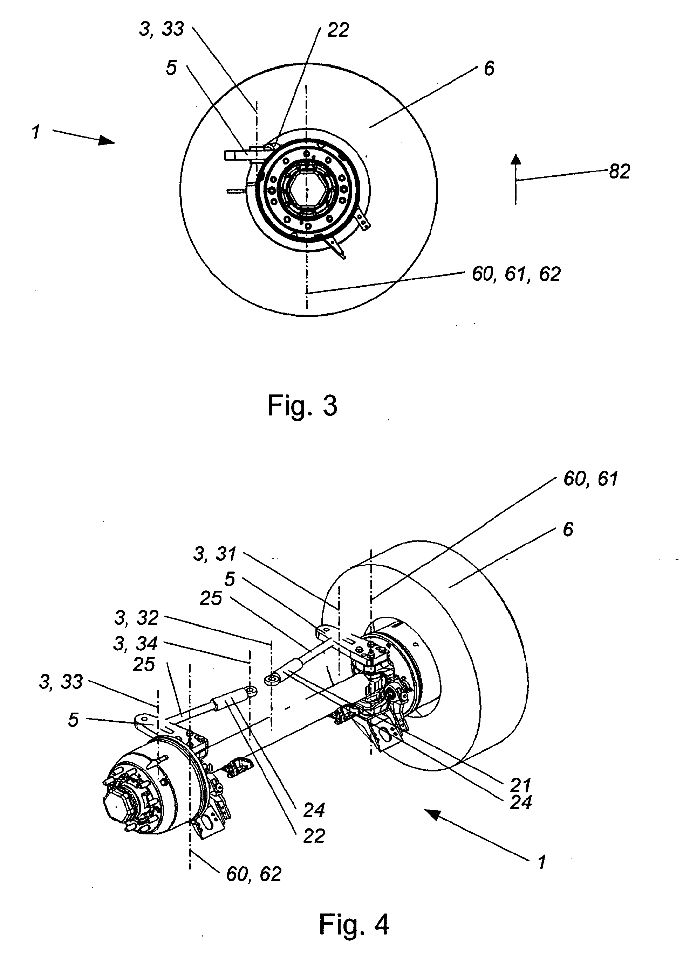

Die Fig. 1 bis 7 zeigen von einem Fahrzeuganhänger mit einer Zwangslenkung für die Lenkung der Räder zumindest einer gelenkten Achse 1 eine besonders vorteilhafte erste und eine besonders vorteilhafte zweite Ausführungsform der gelenkten Achse 1 im Detail, wobei die Zwangslenkung ein hydraulisches System mit zumindest einem Geberzylinder und wenigstens einem ersten Nehmerzylinder 21 umfasst. Damit die Übertragungsfunktion der gelenkten Achse vorgebbar verändert werden kann und derart das Lenkverhalten des Fahrzeuganhängers an unterschiedliche Lenkverhalten unterschiedlicher Zugfahrzeuge angepasst werden kann wird vorgeschlagen, dass zumindest die Lage einer der Angriffspunkte 3 des wenigstens einen ersten Nehmerzylinders 21 quer zur Wirkachse des wenigstens einen ersten Nehmerzylinders 21 mittels einer Verstelleinrichtung 4 veränderbar ist.

Durch die Veränderung wenigstens eines der Angriffspunkte quer zur Wirkachse des ersten Nehmerzylinders wird die Lage der Wirkachse und/oder der Abstand zwischen eben diesem Angriffspunkt 3 und einer zum Angriffspunkt 3 benachbarten Lenk-Drehachse 60 eines Rades 6 verändert. Dadurch ergibt sich der Vorteil, dass die - herkömmlicherweise fixe - Übertragungsfunktion der gelenkten Achse 1 vorgebbar verändert werden kann, insbesondere an ein geändertes Lenkverhalten des Zugfahrzeuges angepasst werden kann. Vorteilhaft dabei ist, dass die vorgebbare Änderung der Übertragungsfunktion der gelenkten Achse 1 ohne einen Eingriff oder Austausch von Geberzylinder oder Nehmerzylinder 21, 22 des hydraulischen Systems erfolgen kann. Vorteilhaft dabei ist, dass diese Änderung der Übertragungsfunktion der gelenkten Achse 1 vor Ort, also auch am Feld oder auf der Straße, durchgeführt werden kann. Vorteilhaft dabei ist weiters, dass das Lenkverhalten des Fahrzeuganhängers - trotz rein mechanischer Betätigung des Geberzylinders, also ohne Zuhilfenahme einer computergestützten Lenkfehlerkompensierung - sehr exakt an unterschiedliche Lenkverhalten unterschiedlicher Zugfahrzeuge angepasst werden kann. Vorteilhaft dabei ist, dass die Zwangslenkung des Fahrzeuganhängers keinen Strom verbraucht und auch bei einem Ausfall des Bordstromnetzes zuverlässig funktioniert. Vorteilhaft dabei ist weiters, dass der Fahrzeuganhänger kostengünstig, da ohne computergestützten Lenkfehlerkompensierung, ausgebildet werden kann und somit kostengünstig verwendet werden kann.

Der erste Nehmerzylinder 21 umfasst einen Hohlzylinder 24 und eine Kolbenstange 25, wobei der Hohlzylinder 24 und die Kolbenstange 25 zur Längenänderung des Nehmerzylinder 21 zueinander relativbewegbar sind. Die vom Fahrzeuganhänger umfasste gelenkte Achse 1 umfasst zwei Räder, ein erstes Rad 6 und ein - nicht dargestelltes - zweites Rad. Das hydraulische System umfasst weiters eine Wirkverbindung von Geberzylinder und erstem Nehmerzylinder 21. Die Wirkverbindung kann insbesondere mittels Hydraulikleitungen ausgebildet sein.

In Fig. 1 bis 7 ist die gelenkte Achse 1 jeweils in einer Geradeausstellung dargestellt. Die lenkbaren Räder der gelenkte Achse 1 sind um Lenk-Drehachsen 60 der gelenkten Achse 1 verdrehbar. Die Lenk-Drehachsen 60 sind im Wesentlichen normal zur Rotationsrichtung der Räder gerichtet. Wenn der Fahrzeuganhänger auf einer horizontalen Ebene steht, dann können die Lenk-Drehachsen 60 insbesondere im Wesentlichen vertikal angeordnet sein.

Die Wirkachse des ersten Nehmerzylinders 21 verläuft durch die einander gegenüberliegenden Angriffspunkte 3 des ersten Nehmerzylinders 21. Der erste Nehmerzylinder 21 ist entlang dessen Längsrichtung längenveränderlich und die Wirkachse des ersten Nehmerzylinders 21 und die Längsrichtung des ersten Nehmerzylinders 21 sind im Wesentlichen parallel zueinander.

Die Angriffspunkte 3 des wenigstens einen ersten Nehmerzylinders 21 sind jene Punkte, an welchen der ersten Nehmerzylinder 21 mit weiteren Teilen des Fahrzeuganhängers verbunden ist, sodass eine Längenänderung des ersten Nehmerzylinders 21, welches eine Änderung des Abstands der beiden Angriffspunkte 3 des ersten Nehmerzylinders 21 bewirkt, ein Lenken der Räder der gelenkten Achse 1 bewirkt. Insbesondere kann vorgesehen sein, dass die Angriffspunkte 3 des wenigstens einen ersten Nehmerzylinders 21 mit den weiteren Teilen des Fahrzeuganhängers mittels Schraub-, Stift und/oder Bolzenverbindung verbunden sind. Längsachse und Wirkachse des wenigstens einen ersten Nehmerzylinders 21 sind im Wesentlichen parallel zueinander. Wenn der erste Nehmerzylinder 21 verkürzt wird, womit sich der Abstand der beiden Angriffspunkte 3 des wenigstens einen ersten Nehmerzylinders 21 verringert, dann lenkt die gelenkte Achse 1 in eine erste Richtung, beispielsweise nach links, wobei das an der gelenkten Achse 1 montierte erste Rad 6 um eine erste Lenk-Drehachse 61 zweier Lenk-Drehachsen 60 der gelenkten Achse 1 verdreht wird bzw. ein an der gelenkten Achse 1 montiertes zweites Rad um eine zweite Lenkachse 62 der beiden Lenk-Drehachsen 60 verdreht wird. Wenn der erste Nehmerzylinder 21 verlängert wird, womit sich der Abstand der beiden Angriffspunkte 3 des wenigstens einen ersten Nehmerzylinders 21 verlängert, dann lenkt die gelenkte Achse 1 in eine zur ersten Richtung entgegengesetzte Richtung, beispielsweise nach rechts, wobei die beiden Räder ebenfalls um die erste bzw. die zweite Lenk-Drehachse 61, 62 verdreht werden. Die Winkeländerung der beiden Räder pro Längenänderung des ersten Nehmerzylinders 21 ist die Übertragungsfunktion der gelenkten Achse 1. Durch die Veränderung der Lage wenigstens einer der Angriffspunkte 3 des Nehmerzylinders 21 wird die Übertagungsfunktion der gelenkten Achse 1 verändert.

Der erste Nehmerzylinder 21 weist an einem ersten seiner beiden Enden einen ersten Angriffspunkt 31 auf. Insbesondere kann vorgesehen sein, dass der erster Angriffspunkt 31 des wenigstens einen ersten Nehmerzylinders 21 mit einem Lenkhebel 5 eines ersten Rades 6 der gelenkten Achse 1 des Fahrzeuganhängers verbunden ist. In diesem Zusammenhang kann weiters vorgesehen sein, dass die Lage des ersten Angriffspunkts 31 quer zur Wirkachse des wenigstens einen ersten Nehmerzylinders 21 veränderbar ist. Wird die Lage des ersten Angriffspunkts 31 quer zur Wirkachse des wenigstens einen ersten Nehmerzylinders 21 verändert, so ändert dies den Abstand des ersten Angriffspunkts 31 zur benachbarten ersten Lenk-Drehachse 61. Wird dieser Abstand verkleinert, so ist die Winkeländerung der gelenkten Achse 1 pro Längenänderung des Nehmerzylinders 21 größer, welches die Übertragungsfunktion dementsprechend verändert. Wird dieser Abstand vergrößert, so ist die Winkeländerung der gelenkten Achse 1 pro Längenänderung des Nehmerzylinders 21 kleiner, welches die Übertragungsfunktion dementsprechend verändert.

Der erste Nehmerzylinder 21 weist an einem zweiten seiner beiden Enden einen zweiten Angriffspunkt 32 auf. Insbesondere kann vorgesehen sein, dass der dem ersten Angriffspunkt 31 gegenüberliegende zweite Angriffspunkt 32 des wenigstens einen ersten Nehmerzylinders 21 im Wesentlichen ortsfest in Bezug auf den Fahrzeuganhänger angeordnet ist. In diesem Zusammenhang kann weiters vorgesehen sein, dass die Lage des zweiten Angriffspunkts 32 quer zur Wirkachse des wenigstens einen ersten Nehmerzylinders 21 veränderbar ist. Wird die Lage des zweiten Angriffspunkts 32 quer zur Wirkachse des wenigstens einen ersten Nehmerzylinders 21 verändert, so ändert dies den Abstand des zweiten Angriffspunkts 31 zur benachbarten ersten Lenk-Drehachse 61 wenig, ändert aber die Lage der Wirkachse des wenigstens einen ersten Nehmerzylinders 21. Bei der Lageänderung des zweiten Angriffspunkts 32 kann die Übertragungsfunktion der gelenkten Achse 1 ebenfalls verändert werden, wobei insbesondere die Linearität der Übertragungsfunktion beeinflusst werden kann. Bei der ersten Ausführungsform der gelenkten Achse 1 ist vorgesehen, dass der erste Angriffspunkt 31 mit dem Lenkhebel 5 des ersten Rades 6 verbunden ist, dass der zweite Angriffspunkt 32 im Wesentlichen ortsfest in Bezug auf den Fahrzeuganhänger angeordnet ist, und dass sowohl die Lage des ersten Angriffspunktes 31 als auch die Lage des zweiten Angriffspunktes 32 mittels einer Verstelleinrichtung 4 quer zur Wirkachse des ersten Nehmerzylinders 21 veränderbar sind. Vorteilhaft dabei ist, dass die Winkeländerung der gelenkten Achse 1 pro Längenänderung des Nehmerzylinders 21 mittels Veränderung der Lage des ersten Angriffspunktes 31 verkleinert bzw. vergrößert werden kann und eine dadurch möglicherweise verstärkt auftretende Nicht-Linearität der Übertragungsfunktion durch entsprechendes Nachrücken der Lage des zweiten Angriffspunktes 32 derart vermieden werden kann, dass die Wirkrichtung des ersten Nehmerzylinders 21 bei Veränderung der Lagen der Angriffspunkte 3 im Wesentlichen parallel verschoben wird. In diesem Zusammenhang ist vorgesehen, dass sowohl bei dem ersten Angriffspunkt 31 als auch bei dem zweiten Angriffspunkt 32 jeweils eine Verstelleinrichtung 4 angeordnet ist.

In einer vorteilhaften, nicht dargestellten zweiten Ausführungsform der gelenkten Achse 1 kann vorgesehen sein, dass lediglich der erste Angriffspunkt 31 lageveränderbar anordenbar ist, womit beim zweiten Angriffspunkt 32 auf die Ausbildung einer Verstelleinrichtung 4 verzichtet werden kann, welches insbesondere bei einem hinreichend langen ersten Nehmerzylinders 21 vorteilhaft sein kann.

Der Angriffspunkt 3 kann insbesondere mittels einer Klemmverbindung oder mittels einer Schraubverbindung an der Verstelleinrichtung 4 befestigt werden.

In vorteilhafter Weise kann vorgesehen sein, dass die Verstelleinrichtung 4 als Langloch 41 ausgebildet ist. Die Länge des Langlochs 41 ist die Länge der Verstelleinrichtung 4 und definiert den Verstellbereich entlang welchem die Lage des Angriffspunkts 3, welcher mit der Verstelleinrichtung 4 verbunden ist, verändert werden kann. Je länger das Langloch 41 ausgebildet ist, desto größer ist der Verstellbereich der Verstelleinrichtung 4. Insbesondere kann der zur veränderbaren Lage vorgesehene Angriffspunkt 3 der Angriffspunkte 3 mittels der Klemmverbindung oder mittels der Schraubverbindung entlang des Langloches 41 befestigt werden. Insbesondere können ein Bolzen und/oder ein Schrauben durch das Langloch 41 durchgesteckt und fixiert werden. Dies ermöglicht die im Wesentlichen beliebig feine Justage der Lage des jeweilig lageveränderbaren Angriffspunktes 3 entlang des Verstellbereichs.

In anderer Ausbildung der Verstelleinrichtung 4 kann vorgesehen sein, dass anstatt eines Langloches 41 wenigstens zwei, insbesondere wenigstens drei Löcher beabstandet zueinander angeordnet sind, insbesondere entlang einer Linie beabstandet zueinander angeordnet sind. Die Länge des Verstellbereichs ist dabei durch den Abstand der am weitesten voneinander entfernten Löcher der Verstelleinrichtung 4 vorgegeben. Je mehr Löcher die Verstelleinrichtung 4 aufweist, desto feiner abgestuft kann die Lage des Angriffspunktes 3 verändert werden. Der jeweilig zur veränderbaren Lage vorgesehene Angriffspunkt 3 der Angriffspunkte 3 kann insbesondere mittels der Klemmverbindung oder mittels der Schraubverbindung vorgebbar an einem der Löcher der Verstelleinrichtung 4 befestigt werden. Insbesondere können der Bolzen und/oder der Schrauben durch wenigstens eines der Löcher durchgesteckt und fixiert werden. Vorteilhaft dabei ist, dass die Lage des Angriffspunktes 3 am Loch auch bei einer sich lockernden Klemm- oder Schraubverbindung sich im Wesentlichen nicht verschiebt, womit eine zusätzliche Lenksicherheit gegeben ist.

In vorteilhafter Weiterbildung können anstatt eines ersten Nehmerzylinders 21 mehrere erste Nehmerzylinder 21 parallel zueinander ausgebildet sein, wobei sämtliche der ersten Nehmerzylinder 21 parallele Wirkachsen zueinander aufweisen.

Zusätzlich zum ersten Nehmerzylinder 21 kann die gelenkte Achse 1 wenigstens einen zweiten Nehmerzylinder 22 umfassen, wobei vorgesehen ist, dass ein zweiter Nehmerzylinder 22 mit einem Lenkhebel 5 eines dem ersten Rad 6 gegenüberliegenden zweiten Rades der gelenkten Achse 1 verbunden ist. Auch der zweite Nehmerzylinder 22 umfasst einen Hohlzylinder 24 und eine Kolbenstange 25, wobei der Hohlzylinder 24 und die Kolbenstange 25 zur Längenänderung des Nehmerzylinder 21 zueinander relativbewegbar sind, womit auch der zweite Nehmerzylinder 22 längenveränderlich in Richtung einer Wirkachse des wenigstens einen zweiten Nehmerzylinders 22 ist.

Der zweite Nehmerzylinder 22 ist weiters mit wenigstens einem des zumindest einen Geberzylinders hydraulisch wirkverbunden. Dementsprechend ist der zweite Nehmerzylinder 22 wirkungsäquivalent zum ersten Nehmerzylinder 21 und der zweite Nehmerzylinder 22 umfasst ebenfalls zwei Angriffspunkte 3, einen dritten Angriffspunkt 33 und einen vierten Angriffspunkt 34. Insbesondere können der erste Nehmerzylinder 22 und der zweite Nehmerzylinder 22 mit demselben Geberzylinder hydraulisch wirkverbunden sein.

Bei der ersten Ausführungsform der gelenkten Achse 1 sind der erste Nehmerzylinder 21 und der zweite Nehmerzylinder 22 im Wesentlichen spiegelsymmetrisch entlang der gelenkten Achse 1 angeordnet. Dies ermöglicht eine vorteilhafte Kraftverteilung in der gelenkten Achse 1 während des Betriebes sowie eine zusätzliche Lenksicherheit. Beispielsweise kann hiebei entweder der erste Nehmerzylinder 21 oder der zweite Nehmerzylinder 22 ausfallen und die Zwangslenkung funktioniert weiterhin.

In vorteilhafter Weiterbildung kann ebenfalls vorgesehen sein, dass das erste Rad 6 und das zweite Rad mittels einer Spurstange 7 wirkverbunden sind, welches die Lenkstabilität der gelenkten Achse 1 erhöhen kann. In diesem Zusammenhang kann vorgesehen sein, dass einer der Angriffspunkte 3 des wenigstens einen ersten Nehmerzylinders 21 mit der Spurstange 7 verbunden ist. Die Lage des mit der Spurstange 7 verbunden verbundene Angriffspunktes 3 kann in vorteilhafter Weiterbildung mittels einer Verstelleinrichtung 4 veränderbar sein.

In einer dritten Ausführungsform der gelenkten Achse 1 kann vorgesehen sein, dass die gelenkte Achse 1 den ersten Nehmerzylinder 21 und den zweite Nehmerzylinder 22 umfasst und spurstangenfrei ausgebildet ist, womit die Bodenfreiheit der gelenkten Achse 1 erhöht werden kann.

Dem Steuersignal des Geberzylinders folgend werden der ersten Nehmerzylinders 21 und/oder der zweite Nehmerzylinders 22 verlängert oder verkürzt relativ zu einer Stellung des ersten Nehmerzylinders 21 und/oder des zweiten Nehmerzylinders 22, in welcher Stellung die Räder der gelenkten Achse 1 zur Geradeausfahrt des Fahrzeuganhängers gerichtet sind. Damit beim Verschieben wenigstens eines der Angriffspunkte 3 des ersten Nehmerzylinders 21 und/oder des zweiten Nehmerzylinders 22 die Räder der gelenkten Achse 1 nicht gelenkt werden, welches Lenken den Geradeauslauf des Fahrzeuganhängers nachteilig beeinflussen könnte, kann in vorteilhafter Weise vorgesehen sein, dass eine Nullstellung des ersten Nehmerzylinders 21 und/oder des zweiten Nehmerzylinders 22 veränderbar, insbesondere vor Ort veränderbar, ist. Dadurch kann gewährleistet werden, dass in jeder Anordnung der Lagen der Angriffspunkte 3 zu einem Nullstellungssignal des Geberzylinders, bei welchem Nullstellungssignal vorgesehen ist, dass die gelenkten Räder der gelenkten Achse 1 um 0°, also weder nach links noch nach rechts, gelenkt sind, die dementsprechende Nullstellung des ersten Nehmerzylinders 21 und/oder des zweiten Nehmerzylinders 22 einfach und zuverlässig ausbildbar ist. In vorteilhafter Weise kann hiezu vorgesehen sein, dass eine Kolbenstange 25 des ersten Nehmerzylinders 21 und/oder die Kolbenstange 25 des zweiten Nehmerzylinders 22 längenveränderbar ist, sodass dabei die Räder der gelenkten Achse 1 während der Lageveränderung wenigstens eines der Angriffspunkte 3 nicht gelenkt werden. In vorteilhafter Weise kann hiezu vorgesehen sein, dass der erste Nehmerzylinder 21 und/oder der zweite Nehmerzylinder 22 beim Verändern der Lage wenigstens eines der Angriffspunkte 3 drucklos gestellt ist, sodass die Angriffspunkte 3 des ersten Nehmerzylinders 21 und/oder die Angriffspunkte 3 des zweiten Nehmerzylinders 22 während der Lageveränderung wenigstens eines der Angriffspunkte 3 ohne einem Lenken der Räder der gelenkten Achse 1 zueinander relatiwerschoben werden können. In beiden Fällen kann die Veränderung der Nullstellung des ersten Nehmerzylinders 21 und/oder des zweiten Nehmerzylinders 22 einfach und vor Ort durchgeführt werden.

Insbesondere kann vorgesehen sein, dass die Lage zumindest eines einer der Angriffspunkte 3 im Wesentlichen parallel zu einer Längsrichtung des Fahrzeuganhängers, also einer Fahrzeuganhängerlängsrichtung 81, veränderbar ist, wie dies bei der in Fig. 1 bis 4 dargestellten ersten Ausführungsform der gelenkten Achse 1 vorgesehen ist. Eine Längsrichtung des Fahrzeuganhängers ist parallel zur Vorwärtsbewegungsrichtung des Fahrzeuganhängers, wenn dieser in einer Geradeausbewegung bewegt wird.

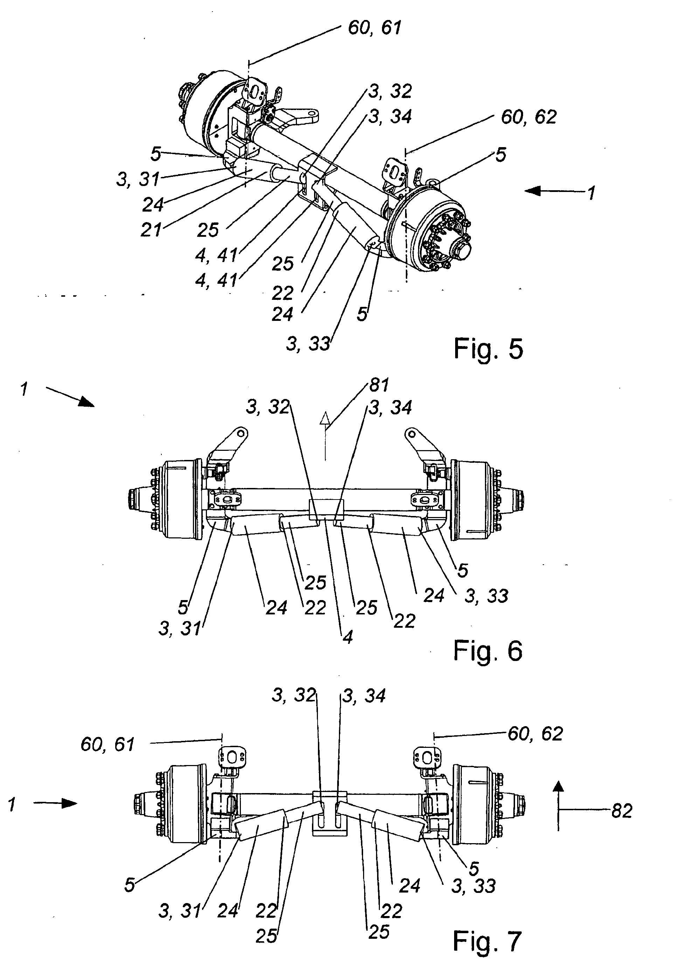

Insbesondere kann vorgesehen sein, dass die Lage zumindest eines einer der Angriffspunkte 3 im Wesentlichen parallel zu einer Vertikalen 82 des Fahrzeuganhängers veränderbar ist, wie dies bei der in Fig. 5 bis 7 dargestellten zweiten Ausführungsform der gelenkten Achse 1 vorgesehen ist. Die Vertikale 82 des Fahrzeuganhängers ist normal zur Längsrichtung des Fahrzeuganhängers angeordnet, wobei die Vertikale 82 des Fahrzeuganhängers vertikal angeordnet ist, wenn der Fahrzeuganhänger auf einer horizontalen Ebene steht. In vorteilhafter Weise hat sich dabei gezeigt, dass bei einer Lageverstellung zumindest eines einer der Angriffspunkte 3 entlang der Höhe des Fahrzeuganhängers, also entlang der Vertikalen 82, das Anpassen des Lenkverhaltens des Fahrzeuganhängers an unterschiedliche Lenkverhalten unterschiedlicher Zugfahrzeuge besonders exakt erfolgen kann, wobei insbesondere Nichtliniearitäten im Ansprechverhalten der gelenkten Achse 1 verringert werden können.

Die zweite Ausführungsform der gelenkten Achse 1 ist in den Fig. 5 bis 7 insofern schematisch vereinfacht dargestellt, als dass die Verbindung der Angriffspunkte 3 des ersten Nehmerzylinders 21 sowie die Verbindung der Angriffspunkte 3 des zweiten Nehmerzylinders 22 mit weiteren Bauteilen der gelenkten Achse 1 durch teilweises Hineinragen der Enden der beiden Nehmerzylinder 21, 22 in die weiteren Bauteilen der gelenkten Achse 1 dargestellt ist. Die tatsächliche Verbindung der Angriffspunkte 3 mit den weiteren Bauteilen der gelenkten Achse 1 kann dabei insbesondere gemäß der in Fig. 1, 2 und 4 dargestellten Gelenkverbindungen ausgebildet sein.

In einer - nicht dargestellten - vierten Ausführungsform der gelenkten Achse 1 kann vorgesehen sein, dass die Lage zumindest eines einer der Angriffspunkte 3 im Wesentlichen parallel zu einer Vertikalen 82 des Fahrzeuganhängers veränderbar ist und dass die Lage zumindest eines einer der Angriffspunkte 3 im Wesentlichen parallel zur Längsrichtung des Fahrzeuganhängers veränderbar ist. Dadurch kann eine besonders hohe Geländetauglichkeit des Fahrzeuganhängers gewährleistet werden, wobei die Lage der Wirkachse des ersten Nehmerzylinders 21 und/oder des zweiten Nehmerzylinders 22 dreidimensional und besonders exakt vorgegeben werden kann.

Jener, beim Lenken des Zugfahrzeuges, variierender Winkel zwischen einer Längsrichtung des Zugfahrzeuges, also einer Zugfahrzeuglängsrichtung, und der Fahrzeuganhängerlängsrichtung 81 wird im Weiteren als Lenkknickung bezeichnet. Bei der Geradeausfahrt des Zuggespanns ist die Lenkknickung 0°. Wenn - bei Anordnung des Zugfahrzeuges und des Fahrzeuganhängers auf einer Ebene - das Zugfahrzeug normal zum Fahrzeuganhänger steht, ist die Lenkknickung 90°. Bedingt durch die Geometrie einer mechanischen Betätigung des Geberzylinders kann der Fall auftreten, dass das veränderliche Volumen im Geberzylinder und die veränderliche Lenkknickung zwischen dem Zugfahrzeug und dem Fahrzeuganhänger nichtlinear zusammenhängen. Dies deshalb, weil der Geberzylinders des Zwangslenkungssystems bei dessen mechanischer Ansteuerung üblicherweise über einen Betätigungshebel angesteuert wird, wobei ein mit Änderung der Lenkknickung sich ändernder Winkel zwischen dem Betätigungshebel und der Wirkachse des Geberzylinders eingeschlossen ist. Mit sich änderndem Winkel variiert die Volumenänderung im Geberzylinder somit, was zu dem nichtlinearen Zusammenhang führt. Dieser nichtlinearen Zusammenhang führt zu Lenkfehlern der gelenkten Achse 1, welche Lenkfehler insbesondere ab einer Lenkknickung von größer oder gleich 35° deutlich auftreten.

Um diese Lenkfehler, insbesondere bei einer Lenkknickung von größer oder gleich 35°, zu minimieren kann in besonders vorteilhafter Weise vorgesehen sein, dass der erste Nehmerzylinder 21, welcher den Hohlzylinder 24 und die Kolbenstange 25 umfasst, derart angeordnet ist, dass der Hohlzylinder 24 benachbart zum ersten Angriffspunkt 31 angeordnet ist, wie dies bei der zweiten Ausführungsform des gelenkten Achse 1 vorgesehen und in den Fig. 5 bis 7 dargestellt ist. Derart ist die Hohlzylinder 24 des ersten Nehmerzylinders 21 näher als die Kolbenstange 25 des ersten Nehmerzylinders 21 zum jeweiligen zum ersten Nehmerzylinder 21 benachbarten Rad 6 angeordnet. Dabei kann die vorstehend beschrieben Nichtlinearität des Zusammenhangs der Lenkknickung und des Steuersignals wenigstens teilweise kompensiert werden, womit die aufgrund der Nichtlinearitäten im mechanischen System auftretenden Lenkfehler wenigstens deutlich verringert werden können, möglicherweise im Wesentlichen kompensiert werden.

In diesem Zusammenhang kann insbesondere vorgesehen sein, wie dies bei der zweiten Ausführungsform vorgesehen ist, dass der erste Nehmerzylinder 21 und der zweite Nehmerzylinder 22, welcher ebenfalls einen Hohlzylinder 24 und eine Kolbenstange 25 umfasst, derart ausgebildet sind, dass die Kolbenstange 25 des ersten Nehmerzylinders 21 und die Kolbenstange 25 des zweiten Nehmerzylinders 22 benachbart zueinander, insbesondere im Wesentlichen zueinander gerichtet, angeordnet sind. Bei der Kurvenfahrt werden dabei in vorteilhafter Weise sowohl am Rad 6, welches in der Kurve weiter innen, also kurveninnenseitig, angeordnet ist, und am Rad 6, welches in der Kurve weiter außen, also kurvenaußenseitig, angeordnet ist, möglicherweise auftretende Lenkfehler wenigstens minimiert, insbesondere im Wesentlichen kompensiert. Derart ergibt sich eine sehr exakt verlaufende Radinnenspur und ebenso eine sehr exakt verkaufende Radaußenspur, wobei ohne weiters Zutun das kurveninnenseitige angeordnete Rad 6 stärker als das kurvenaußenseitig angeordnete Rad 6 eingelenkt wird. Dabei kann insbesondere vorgesehen sein, dass der Hohlzylinder 24 des ersten Nehmerzylinders 21 und der Hohlzylinder 24 des zweiten Nehmerzylinders 22 möglichst weit beabstandet zueinander angeordnet sind.

In besonders vorteilhafter Weise kann in diesem Zusammenhang vorgesehen sein, dass die Lage zumindest eines einer der Angriffspunkte 3 im Wesentlichen parallel zu einer Vertikalen des Fahrzeuganhängers veränderbar ist, und dass der erste Nehmerzylinder 21 und der zweite Nehmerzylinder 22, welcher ebenfalls einen Hohlzylinder 24 und eine Kolbenstange 25 umfasst, derart ausgebildet sind, dass die Kolbenstange 25 des ersten Nehmerzylinders 21 und die Kolbenstange 25 des zweiten Nehmerzylinders 22 benachbart zueinander, insbesondere im Wesentlichen zueinander gerichtet, angeordnet sind, wie dies ebenfalls in den Fig. 5 bis 7 dargestellt ist und in der zweiten Ausführungsform der gelenkten Achse 1 vorgesehen ist. Vorteilhaft dabei ist, dass die Anordnung der Wirkachsen des ersten Nehmerzylinders 21 und des zweiten Nehmerzylinders 22 dreidimensional vorgebbar anordnenbar sind, sodass das Lenkverhalten des Fahrzeuganhängers - trotz rein mechanischer Betätigung des Geberzylinders, also ohne Zuhilfenahme einer computergestützten Lenkfehlerkompensierung - sehr exakt an das Lenkverhalten des Zugfahrzeuges angepasst werden kann. Vorteilhaft dabei ist, dass die Zwangslenkung des Fahrzeuganhängers keinen Strom verbraucht und auch bei einem Ausfall des Bordstromnetzes zuverlässig funktioniert. Vorteilhaft dabei ist weiters, dass der Fahrzeuganhänger kostengünstig, da ohne computergestützten Lenkfehlerkompensierung, ausgebildet werden kann und kostengünstig verwendet werden kann.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Fahrzeuganhänger mit einer Zwangslenkung für die Lenkung der Räder zumindest einer gelenkten Achse (1), wobei die Zwangslenkung ein hydraulisches System mit zumindest einem Geberzylinder und wenigstens einem ersten Nehmerzylinder (21) umfasst, **dadurch gekennzeichnet, dass** zumindest die Lage einer der Angriffspunkte (3) des wenigstens einen ersten Nehmerzylinders (21) quer zur Wirkachse des wenigstens einen ersten Nehmerzylinders (21) mittels einer Verstelleinrichtung (4) veränderbar ist.

2. Fahrzeuganhänger nach Anspruch 1, **dadurch gekennzeichnet, dass** ein erster Angriffspunkt (31) des wenigstens einen ersten Nehmerzylinders (21) mit einem Lenkhebel (5) eines ersten Rades (6) der gelenkten Achse (1) des Fahrzeuganhängers verbunden ist.

3. Fahrzeuganhänger nach Anspruch 1 oder 2, **dadurch gekennzeichnet, dass** ein dem ersten Angriffspunkt (31) gegenüberliegender zweiter Angriffspunkt (32) des wenigstens einen ersten Nehmerzylinders (21) im Wesentlichen ortsfest in Bezug auf den Fahrzeuganhänger angeordnet ist.

4. Fahrzeuganhänger nach Anspruch 2 oder 3, **dadurch gekennzeichnet, dass** sowohl bei dem ersten Angriffspunkt (31) als auch bei dem zweiten Angriffspunkt (32) jeweils eine Verstelleinrichtung (4) angeordnet ist.

5. Fahrzeuganhänger nach einem der Ansprüche 1 bis 4, **dadurch gekennzeichnet, dass** die Verstelleinrichtung (4) als Langloch (41) ausgebildet ist.

6. Fahrzeuganhänger nach einem der Ansprüche 1 bis 5, **dadurch gekennzeichnet, dass** ein zweiter Nehmerzylinder (22) mit einem Lenkhebel (5) eines dem ersten Rad (6) gegenüberliegenden zweiten Rades der gelenkten Achse (1) verbunden ist.

7. Fahrzeuganhänger nach einem der Ansprüche 1 bis 6, **dadurch gekennzeichnet, dass** das erste Rad (6) und das zweite Rad mittels einer Spurstange (7) wirkverbunden sind.

8. Fahrzeuganhänger nach einem der Ansprüche 1 bis 7, **dadurch gekennzeichnet, dass** eine Nullstellung des ersten Nehmerzylinders (21) und/oder des zweiten Nehmerzylinders (22) veränderbar ist.

9. Fahrzeuganhänger nach einem der Ansprüche 1 bis 8, **dadurch gekennzeichnet, dass** die Lage zumindest eines einer der Angriffspunkte (3) im Wesentlichen parallel zu einer Längsrichtung des Fahrzeuganhängers veränderbar ist.

10. Fahrzeuganhänger nach einem der Ansprüche 1 bis 9, **dadurch gekennzeichnet, dass** die Lage zumindest eines einer der Angriffspunkte (3) im Wesentlichen parallel zu einer Vertikalen des Fahrzeuganhängers veränderbar ist.

11. Fahrzeuganhänger nach einem der Ansprüche 2 bis 10, **dadurch gekennzeichnet, dass** der erste Nehmerzylinder (21) einen Hohlzylinder (24) und eine Kolbenstange (25) umfasst, und dass der Hohlzylinder (24) benachbart zum ersten Angriffspunkt (31) angeordnet ist.

12. Fahrzeuganhänger nach einem der Ansprüche 11, **dadurch gekennzeichnet, dass** der zweite Nehmerzylinder (22) einen Hohlzylinder (24) und eine Kolbenstange (25) umfasst, und dass die Kolbenstange (25) des ersten Nehmerzylinders (21) und die Kolbenstange (25) des zweiten Nehmerzylinders (22) benachbart zueinander, insbesondere im Wesentlichen zueinander gerichtet, angeordnet sind.

## Claims

1. A vehicle trailer having a positive steering unit for the steering of the wheels of at least one steered axle (1), wherein the positive steering unit comprises a hydraulic system having at least one master cylinder and at least one slave cylinder (21), **characterized in that** at least the location of one of the engagement points (3) of the at least one first slave cylinder (21) is variable transversely to the operational axis of the at least one first slave cylinder (21) by means of an adjustment device (4).

2. The vehicle trailer according to Claim 1, **characterized in that** a first engagement point (31) of the at least one first slave cylinder (21) is connected to a steering lever (5) of first wheel (6) of the steered axle (1) of the vehicle trailer.

3. The vehicle trailer according to Claim 1 or 2, **characterized in that** a second engagement point (32), which is opposite to the first engagement point (31), of the at least one first slave cylinder (21) is arranged substantially fixed in place in relation to the vehicle trailer.

4. The vehicle trailer according to Claim 2 or 3, **characterized in that** an adjustment device (4) is respectively arranged both in the case of the first engagement point (31) and also in the case of the second engagement point (32).

5. The vehicle trailer according to one of Claims 1 to 4, **characterized in that** the adjustment device (4) is implemented as an oblong hole (41).

6. The vehicle trailer according to one of Claims 1 to 5, **characterized in that** a second slave cylinder (22) is connected to a steering lever (5) of a second wheel, which is opposite to the first wheel (6), of the steered axle (1).

7. The vehicle trailer according to one of Claims 1 to 6, **characterized in that** the first wheel (6) and the second wheel are operationally connected by means of a tie rod (7).

8. The vehicle trailer according to one of Claims 1 to 7, **characterized in that** a zero position of the first slave cylinder (21) and/or of the second slave cylinder (22) is variable.

9. The vehicle trailer according to one of Claims 1 to 8, **characterized in that** the location of at least one of the engagement points (3) is variable substantially parallel to a longitudinal direction of the vehicle trailer.

10. The vehicle trailer according to one of Claims 1 to 9, **characterized in that** the location of at least one of the engagement points (3) is variable substantially parallel to a vertical direction of the vehicle trailer.

11. The vehicle trailer according to one of Claims 2 to 10, **characterized in that** the first slave cylinder (21) comprises a hollow cylinder (24) and a piston rod (25), and the hollow cylinder (24) is arranged adjacent to the first engagement point (31).

12. The vehicle trailer according to one of Claims 11, **characterized in that** the second slave cylinder (22) comprises a hollow cylinder (24) and a piston rod (25), and the piston rod (25) of the first slave cylinder (21) and the piston rod (25) of the second slave cylinder (22) arc arranged adjacent to one another, in particular substantially oriented toward one another.

## Revendications

1. Remorque de véhicule avec une direction forcée pour la direction des roues d'au moins un essieu dirigé (1), dans lequel la direction forcée comprend un système hydraulique avec au moins un maître-cylindre et au moins un premier cylindre récepteur (21), **caractérisée en ce qu'**au moins la position de l'un des points d'attaque (3) de l'au moins un premier cylindre récepteur (21) est modifiable perpendiculairement à l'axe d'action de l'au moins un premier cylindre récepteur (21) au moyen d'un dispositif d'ajustement (4).

2. Remorque de véhicule selon la revendication 1, **caractérisée en ce qu'**un premier point d'attaque (31) de l'au moins un premier cylindre récepteur (21) est relié à un levier de direction (5) d'une première roue (6) de l'essieu dirigé (1) de la remorque de véhicule.

3. Remorque de véhicule selon la revendication 1 ou 2, **caractérisée en ce qu'**un deuxième point d'attaque (32) faisant face au premier point d'attaque (31) de l'au moins un premier cylindre récepteur (21) est disposé de façon sensiblement stationnaire par rapport à la remorque de véhicule.

4. Remorque de véhicule selon la revendication 2 ou 3, **caractérisée en ce qu'**un dispositif d'ajustement (4) est prévu avec le premier point d'attaque (31) et un autre avec le deuxième point d'attaque (32).

5. Remorque de véhicule selon l'une des revendications 1 à 4, **caractérisée en ce que** le dispositif d'ajustement (4) est conçu comme un trou oblong (41).

6. Remorque de véhicule selon l'une des revendications 1 à 5, **caractérisée en ce qu'**un deuxième cylindre récepteur (22) est relié à un levier de direction (5) d'une deuxième roue de l'essieu dirigé (1) faisant face à la première roue (6).

7. Remorque de véhicule selon l'une des revendications 1 à 6, **caractérisée en ce que** la première roue (6) et la deuxième roue sont en liaison active au moyen d'une barre d'accouplement (7).

8. Remorque de véhicule selon l'une des revendications 1 à 7, **caractérisée en ce qu'**une position à zéro du premier cylindre récepteur (21) et/ou du deuxième cylindre récepteur (22) est modifiable.

9. Remorque de véhicule selon l'une des revendications 1 à 8, **caractérisée en ce que** la position d'au moins un des points d'attaque (3) est modifiable dans un sens sensiblement parallèle à un sens longitudinal de la remorque de véhicule.

10. Remorque de véhicule selon l'une des revendications 1 à 9, **caractérisée en ce que** la position d'au moins un des points d'attaque (3) est modifiable dans un sens sensiblement parallèle à une verticale de la remorque de véhicule.

11. Remorque de véhicule selon l'une des revendications 2 à 10, **caractérisée en ce que** le premier cylindre récepteur (21) comprend un cylindre creux (24) et une tige de piston (25) et **en ce que** le cylindre creux (24) est disposé au voisinage du premier point d'attaque (31).

12. Remorque de véhicule selon la revendication 11, **caractérisée en ce que** le deuxième cylindre récepteur (22) comprend un cylindre creux (24) et une tige de piston (25) et **en ce que** la tige de piston (25) du premier cylindre récepteur (21) et la tige de piston (25) du deuxième cylindre récepteur (22) sont disposées au voisinage l'une de l'autre, en particulier dirigées sensiblement l'une vers l'autre.
